# EUROPEAN PATENT SPECIFICATION

(11) **EP 1 829 925 B1**
(45) Date of publication and mention of the grant of the patent: **29.02.2012**
(21) Application number: 05816669.5
(22) Date of filing: 19.12.2005
(51) Int. Cl.: C08L 19/00, B60C 1/00, C08C 19/44, C08K 3/22

(54) **RUBBER COMPOSITION, METHOD FOR PRODUCING SAME AND TIRE**
KAUTSCHUKZUSAMMENSETZUNG, HERSTELLUNGSVERFAHREN DAFÜR UND REIFEN
COMPOSITION DE CAOUTCHOUC, PROCEDE POUR LA PRODUIRE ET PNEUMATIQUE

(30) Priority: 22.12.2004 JP 2004371923
(43) Date of publication of application: 05.09.2007
(73) Proprietor: Bridgestone Corporation, Tokyo 104-8340 (JP)
(72) Inventor: SUZUKI, Eiju, Bridgestone Corp., Technical Center, Kodaira-shi, Tokyo 1878531 (JP)
(74) Representative: Whalley, Kevin
(86) International application number: PCT/JP2005/023278
(87) International publication number: WO 2006/068094

(56) References cited:
- JP-A- 2001 240 706
- JP-A- 2003 171 418
- JP-A- 2004 018 795
- JP-A- 2004 067 982
- DATABASE WPI Week 200452 Thomson Scientific, London, GB; AN 2004-535886 XP002569359 & JP 2004 182894 A (BRIDGESTONE CORP) 2 July 2004 (2004-07-02)
- DATABASE WPI Week 200175 Thomson Scientific, London, GB; AN 2001-651291 XP002569360 & JP 2001 247720 A (SUMITOMO RUBBER IND LTD) 11 September 2001 (2001-09-11)

## Description

### TECHNICAL FIELD

The present invention relates to a rubber composition, a method for producing the same and a tire. More particularly, the present invention relates to a rubber composition that has excellent interaction between a rubber component and carbon black, which enables improvement of dispersibility of the carbon black and is capable of providing a tire being excellent in low heat generation property, rupture property, and abrasion resistance, a method for producing the same with high efficiency, and to a tire made of the composition described above and having the above-mentioned properties.

### BACKGROUND ART

In recent years, requirement to a reduction in fuel consumption of cars is getting severer in relation to global movement of regulating carbon dioxide emission, along with social requirement to energy saving and an increased interest in environmental issues. To meet such requirement, improvement of tire property, more particularly, a reduction in rolling resistance of a tire has been demanded. A method of optimizing a tire structure has been studied as a method of reducing the rolling resistance of a tire, but it has so far been carried out as the most usual method to use a rubber composition generating less heat.
To obtain such a rubber composition generating less heat, a large number of techniques for enhancing the dispersibility of a filler used for a rubber composition has so far been developed. Among such techniques, particularly a method in which a polymerizable active end of a diene base polymer obtained by anionic polymerization using an organic lithium compound is modified with a functional group having interaction with a filler is becoming most popular.
Among such methods, known as representative methods are a method in which carbon black is used for a filler to modify a polymerizable active end with a tin compound (see, for example, Patent Document 1) and a method in which carbon black is used in the same manner to introduce an amino group into a polymerizable active end (see, for example, Patent Document 2). These methods are capable of increasing the dispersibility of carbon black. However, a further increase in dispersibility of carbon black is demanded.

On the other hand, a modified polymer which is obtained by introducing alkoxysilane having a dialkylamino group into an active end of a polymer obtained by anionic polymerization using alkyllithium or lithium amide as a polymerization initiator, is disclosed (see, for example, Patent Documents 3 and 4). However, use of the above modified polymer, of which the amino group is substituted with a dialkyl group having less effect to carbon black, fails to give sufficient effects as compared with the use of a modified polymer obtained by using a tin-based modifier, particularly for blends that contain a large amount of carbon black.
Further, a rubber composition that includes a modified polymer obtained by using a hydrocarbyloxysilane compound as a modifying agent and a tin-based ester compound is disclosed (see, for example, Patent Document 5). However, the rubber composition significantly improves loss-reducing effect with respect to silica fillers but its loss-reducing effect with respect to carbon black fillers, is not sufficient.

Patent Document 1: JP B 5-87530
Patent Document 2: JP 62-207342 A
Patent Document 3: JP 06-53763 B
Patent Document 4: JP 06-57767 B
Patent Document 5: WO 03/087171
Rubber compositions are also known from EP 1457501, JP 2004-535886 and JP 2000 0058850.

### DISCLOSURE OF THE INVENTION

In view of the above-mentioned circumstances, it is an object of the present invention to provide a rubber composition that has excellent interaction between a rubber component and carbon black, which enables improvement of dispersibility of the carbon black and is capable of providing a tire being excellent in low heat generation property, rupture property, abrasion resistance, and the like, a method for producing the same with high efficiency, and a tire made of the composition described above and having the above-mentioned properties.
The inventors of the present invention have made extensive studies to achieve the above-mentioned object and as a result, they have found that a rubber composition that includes a modified polymer having a specified amine structure and a mild oxidizer such as silver oxide has excellent interaction between a rubber component and carbon black and can provide a tire excellent in low heat generation property, rupture property, and abrasion resistance.
Further, the inventors of the present invention have found that by using a specified blending method, a rubber composition excellent in particularly loss-reducing property can be obtained.
The present invention has been accomplished based on these findings.

Therefore, the present invention provides:
(1) a rubber composition including (A) a rubber component containing a modified polymer having a protic amine structure and (B) an oxidizer; wherein the oxidizer is cuprous oxide (Cu₂O) and/or- silver oxide (Ag₂O).
(2) the rubber composition according to an item (1), in which the modified polymer as the component (A) is obtained by a production method that includes the steps of
   (a) reacting a protic amine functional group-containing compound represented by the general formula (I):

      X¹-A¹-Y¹ (I)

      where X¹ is a monovalent organic group having a functional group capable of reacting with an active site of the polymer to produce a bond, Y¹ is a monovalent organic group having a protic amine functional group in which an active proton is hydrogen bonded to nitrogen, and A¹ is a divalent hydrocarbon group having 1 to 20 carbon atoms, with an organo alkali metal compound or an alkaline earth metal compound to metallize the active proton in the protic amine functional group-containing compound with an alkali metal or an alkaline earth metal to obtain a modifier;
   (b) reacting the modifier with a polymer having an active site at the active site to obtain an intermediate modified product of the polymer; and
   (c) separating the metal from the metallized site of the intermediate modified product of the polymer to reproduce an active proton;
(3) the rubber composition according to item (1), in which the modified polymer as the component (A) is obtained by a production method that includes the steps of
   (d) reacting a protic amine functional group-containing compound represented by the general formula (I):

      X¹-A¹-Y¹ (I)

      where X¹ is a monovalent organic group having a functional group capable of reacting with an active site of the polymer to produce a bond, Y¹ is a monovalent organic group having a protic amine functional group in which an active proton is hydrogen bonded to nitrogen, and A¹ is a divalent hydrocarbon group having 1 to 20 carbon atoms, with an alkylsilyl halide to obtain a modifier;
   (e) reacting the modifier with a polymer having an active site at the active site to obtain an intermediate modified product of the polymer; and
   (f) separating an alkylsilyl group from an alkylsilylated site of the intermediate modified product of the polymer to reproduce an active proton
(4) the rubber composition according to any one of the above-mentioned items (1) to (3), in which the rubber component (A) contains 10 mass% or more of the modified polymer, and the rubber composition contains 0.05 mass parts or more and less than 5 mass parts of the oxidizer (B) per 100 mass parts of the component (A);
(5) the rubber composition according to any one of the above-mentioned items (1) to (4), in which the rubber composition contains 10 mass parts or more of carbon black (C) per 100 mass parts of the component (A);
(6) the rubber composition according to any one of the above-mentioned items (1) to (5), which is sulfur curable;
(7) a method of producing the rubber composition according to any one of the above-mentioned items (1) to (6), including a stage of mixing the modified polymer in the component (A) and the component (B);
(8) the method according to the above-mentioned item (7), in which another compounding ingredient and/or rubber is mixed with a mixture of the modified polymer in the component (A) and the component (B) ;
(9) the method according to the above-mentioned item (7), in which a mixture of the modified polymer in the component (A) and the component (B) and carbon black, or the modified polymer in the component (A), the component (B) and carbon black are mixed and then an antioxidant is added to the resultant mixture;
(10) the method according to any one of the above-mentioned items (7) to (9), in which an antioxidant and a vulcanizing agent are mixed in the same stage; and
(11) a tire including the rubber composition according to any one of the above-mentioned items (1) to (6).

### BEST MODE FOR CARRYING OUT THE INVENTION

The rubber composition of the present invention is a composition that includes (A) a rubber component containing a modified polymer having a protic amine structure and (B) an oxidizer.
The modified polymer having a protic amine structure in the rubber component (A) includes a modified polymer I obtained by using a first modifier and a modified polymer II obtained by using a second modifier as shown below.
The first modifier is obtained by reacting a compound containing a protic amine functional group represented by the following general formula (I) with an organic alkali metal compound or alkaline earth metal compound by a step (a). On the other hand, the second modifier is obtained by reacting the compound containing a protic amine functional group represented by the following general formula (I) with an alkylsilyl halide by a step (d).
Here, the first modifier may contain a lithium compound or a similar compound as a polymerization initiator used in polymerization of diene polymers described hereinbelow. The reaction product in this case has advantage that it can be used in a subsequent step (b) without any particular post-treatment. On the other hand, the second modifier is advantageous in that it is superior in temporal stability to the first modifier and hence is hardly decomposed, so a high purity target compound can be obtained via an appropriate purification step.

The protic amine functional group-containing compound that serves as a material for the above modifier, which must have a protic amine functional group and also a functional group that reacts with a polymer having an organometal type active site at the active site of the polymer, includes, taking this into consideration, a protic amine functional group-containing compound represented by the general formula (I):

X¹-A¹-Y¹ (I)

where X¹ is a monovalent organic group having a functional group capable of reacting with an active site of the polymer to produce a bond, Y¹ is a monovalent organic group having a protic amine functional group in which an active proton is hydrogen bonded to nitrogen, and A¹ is a divalent hydrocarbon group having 1 to 20 carbon atoms.
Reacting the protic amine functional group-containing compound with an organo alkali metal compound or alkaline earth metal compound can provide the first modifier while reacting the protic amine functional group-containing compound with an alkylsilyl halide can provide the second modifier. The alkylsilyl halide that can be used in the production of the second modifier is, for example, trimethylsilyl chloride, which is particularly preferable.

In the general formula (I), specific examples of the protic amine functional group, in which an active proton is hydrogen bonded to nitrogen, that the monovalent organic group represented by Y¹ has, include primary amines and onium salts thereof, secondary amines and onium salts thereof, primary amides, secondary amides, acetylamide, imino, carbamoyl, and ureide.
Examples of the divalent hydrocarbon group having 1 to 20 carbon atoms represented by A¹ include alkylene groups having 1 to 20 carbon atoms, alkenylene groups having 2 to 20 carbon atoms, arylene groups having 6 to 20 carbon atoms, and aralkylene groups having 7 to 20 carbon atoms. Among these, alkylene groups having 1 to 20 carbon atoms, in particular alkylene groups having 1 to 10 carbon atoms are preferable. The alkylene group may be linear, branched or cyclic, with linear ones being preferable. Examples of the linear alkylene group include a methylene group, an ethylene group, a trimethylene group, a tetramethylene group, a pentamethylene group, a hexamethylene group, an octamethylene group, and a decamethylene group.
Further, X¹ in the general formula (I) above is not particularly limited as far as it is a monovalent organic group that reacts with an active site of a polymer to produce a bond. However, examples of the functional group that reacts with an active site of a polymer to produce a bond include a halogen atom, a carbonyl group, a thiocarbonyl group, an epoxy group, a thioepoxy group, a hydrocarbyloxysilyl group, and a sulfonyloxy group. Preferably, X¹ is a hydrocarbyloxysilyl group represented by general formula (II)

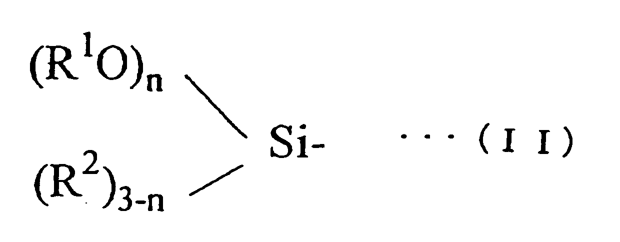

where R¹ and R² independently represent a monovalent hydrocarbyl group having 1 to 18 carbon atoms, n represents an integer of 1 to 3, provided that when there are a plurality of R¹O's, the R¹O's may be the same or different and when there are a plurality of R²'s, the R²'s may be the same or different.
In the general formula (II), examples of the monovalent hydrocarbyl group having 1 to 18 carbon atoms represented by R¹ or R² include alkyl groups having 1 to 18 carbon atoms, alkenyl groups having 2 to 18 carbon atoms, aryl groups having 6 to 18 carbon atoms, and aralkyl groups having 7 to 18 carbon atoms. Here, the alkyl groups and alkenyl groups may be linear, branched, or cyclic. Examples thereof often include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, and a cyclohexenyl group.
The aryl group may have a substituent such as a lower alkyl group on the aromatic ring and examples of the aryl group include a phenyl group, a tollyl group, a xylyl group, and a naphthyl group. Further, the aralkyl group may have a substituent such as a lower alkyl group on the aromatic ring and examples of the aralkyl group include a benzyl group, a phenethyl group, and a naphthylmethyl group.

Preferable examples of compounds containing protic-amine functional groups represented by the general formula (I) mentioned above include N-methylaminopropyltrimethoxysilane, N-(3-triethoxysilylpropyl)acetoamide, trimethoxysilyl compound corresponding to the triethoxysilyl compound, methyldiethoxysilyl compound, ethyldiethoxysilyl compound, methyldimethoxysilyl compound, and ethyldimethoxysilyl compound. Among those, N-methylaminopropyltrimethoxysilane, and N-(3-triethoxysilylpropyl)acetoamide are the most suitable.
In addition, examples of compounds containing protic-amine functional groups include N-phenylaminopropyltrimethoxysilane, N-phenylaminopropyltriethoxysilane, n-butylaminopropylmethoxy silane, n-butylaminopropyltriethoxysilane, 3-(N-aminopropyl) trimethoxysilane, N-cyclohexylaminopropyltriethoxysilane, and 3-piperazinopropyltrimethoxysilane.
Further, in the present invention, the organo alkali metal compounds or organo alkaline earth metal compounds used in the reaction with the protic amine functional group-containing compound are preferably organolithium compounds. The organolithium compound may be of the same type as those lithium compounds used as polymerization initiators in the polymerization of diene polymers described hereinbelow.

According to the present invention, the modified polymer I and modified polymer II in the rubber component (A) can be produced by using the first and second modifiers obtained as described above, (b) and (f) sequentially reacting the modifiers with a polymer having an active site at the active site to obtain intermediate modified products of the polymers, respectively, and (c) and (g) separating the metal from a metallized site of the intermediate modified product to reproduce an active proton.
In the steps (b) and (f) above, the active sites of the polymers do not react with the protic amine functional groups metallized with the alkali metal or alkaline earth metal in the first and second modifiers, respectively but react with the X¹ group in the general formula (I) to produce intermediate modified products of the polymers.
The method of producing the polymer having the above-mentioned active site in the molecule is not particularly limited and any of a solution polymerization method, a gas-phase polymerization method, and a bulk polymerization method may be used, with a solution polymerization method being particularly preferable. The type of polymerization may be either batch-wise or continuous. Further, the metal in the active site is preferably one selected from alkali metals and alkaline earth metals, with lithium metal being particularly preferable.
In the solution polymerization method, using, for example, a lithium compound as a polymerization initiator, a diene compound alone or a diene compound and an aromatic vinyl compound can be anion-polymerized to produce a target polymer. The active site is not limited, as long as it is arranged in the molecule of the polymer but generally the active site is bonded to an end of the polymer when the polymer is produced by anion polymerization using an alkali metal compound and/or alkaline earth metal compound as a polymerization initiator.

The diene compound is preferably a conjugated diene compound and examples thereof include 1,3-butadiene, isoprene, 1,3-pentadiene, 2,3-dimethylbutadiene, 2-phenyl-1, 3-butadiene, and 1, 3-hexadiene. These may be used singly or two or more of them may be used in combination. Among them, 1, 3-butadiene and isoprene are particularly preferable.
Further, examples of the aromatic vinyl compound used for copolymerization with the conjugated diene compounds include styrene, α -methylstyrene, 1-vinylnaphthalene, 3-vinyltoluene, ethylvinylbenzene, divinylbenzene, 4-cyclohexylstyrene, and 2,4,6-trimethylstyrene. These may be used singly or two or more of them may be used in combination. Among these, styrene is particularly preferable.
Further, when polymerization using a conjugated diene compound and an aromatic vinyl compound as monomers, respectively use of 1,3-butadiene and styrene is preferred because of a practicality such as the availability, and because anionic polymerization property is excellent in living property and the like.
Further, when a solution polymerization method is used, the concentration of the monomer in the solution is preferably 5 to 50 mass%, more preferably 10 to 30 mass%. Note that when copolymerization is performed using a conjugated diene compound and an aromatic vinyl compound, the content of the aromatic vinyl compound in the charged monomer mixture is preferably 3 to 50 mass%, more preferably 5 to 45 mass%.

In the anion polymerization, the polymerization initiator preferably is a lithium compound.
The lithium compound as a polymerization initiator is not particularly limited and hydrocarbyl lithium and lithium amide compounds are preferably used. In the former case where the hydrocarbyl lithium is used, a conjugated diene polymer that has a hydrocarbyl group on the polymerization initiating end and a polymerization active site on the opposite end is obtained. On the other hand, in the latter case where a lithium amide compound is used, a conjugated diene polymer having a nitrogen-containing group on the polymerization initiating end and a polymerization active site on the opposite end is obtained.
For the hydrocarbyl lithium, those having a hydrocarbyl group having 2 to 20 carbon atoms is preferable, and examples thereof include ethyl lithium, n-propyllithium, isopropyl lithium, n-butyl lithium, sec-butyl lithium, tert-octyl lithium, n-decyl lithium, phenyl lithium, 2-naphthyl lithium, 2-butyl-phenyl lithium, 4-phenyl-butyl lithium, cyclohexyl lithium, cyclopentyl lithium, and a reaction product of diisopropenylbenzene and butyl lithium. Among those, n-butyl lithium is preferred.

On the other hand, examples of lithium amide compounds include lithium hexamethyleneimide, lithium pyrrolidide, lithium piperidide, lithium heptamethyleneimide, lithium dodecamethylene imide, lithium dimethyl amide, lithium diethyl amide, lithium dibutyl amide, lithium dipropyl amide, lithium diheptyl amide, lithium dihexyl amide, lithium dioctyl amide, lithium di-2-ethylhexyl amide, lithium didecyl amide, lithium-N-methylpiperazide, lithium ethylpropyl amide, lithium ethylbutyl amide, lithium methylbutyl amide, lithium ethylbenzyl amide, and lithium methylphenethyl amide. Among these, by considering interaction effect and polymerization initiating function with carbon black, cyclic lithium amide such as lithium hexamethylene imide, lithium pyrolizide, lithium, piperidide, lithium heptamethylene imide, and lithium dodecamethylene imide, is preferred. Among those lithium hexamethylene imide and lithium pyrolizide are the most suitable.
The lithium amide compound mostly used in the polymerization is generally prepared in advance from a secondary amine and a lithium compound. However, the lithium amide compound can be prepared in the polymerization system (in situ). Further, the use amount of the polymerization initiator is selected in the range of preferably 0.2 to 20 mmol per 100 g monomer.

The method for producing a conjugated polymer by anion polymerization using the lithium compound as a polymerization initiator is not particularly limited and a conventional method may be used.
Specifically, the target conjugated diene polymer can be obtained by reacting a conjugated diene compound or a conjugated diene compound and an aromatic vinyl compound by anion polymerization in an organic solvent inert to the reaction, for example, a hydrocarbon solvent such as an aliphatic, alicyclic, or aromatic hydrocarbon compound using the lithium compound as a polymerization initiator in the presence of a randomizer as desired.
The hydrocarbon solvents are preferably those having 3 to 8 carbon atoms and include, for example, propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used singly or two or more of them may be used in combination.

Further, the randomizer used as desired refers to a compound having an action to control the microstructure of the conjugated diene polymer, for example, an increase in 1,2-bond in the butadiene moiety in the butadiene-styrene copolymer or 3,4-bond in the isoprene polymer, or to control the composition distribution of monomer units in the conjugated diene compound-aromatic vinyl compound copolymer, for example, randomization of butadiene unit and styrene unit in the butadiene-styrene copolymer. The randomizer is not particularly limited and any compound appropriately selected from the known compounds generally used as randomizers can be used. Specific examples thereof include ethers and tertiary amines such as dimethoxybenzene, tetrahydrofuran, dimethoxyethane, diethylene glycol dibutyl ether, diethylene glycol dimethyl ether, bistetrahydrofurylpropane, triethylamine, pyridine, N-methylmorpholine, N,N,N',N'-tetramethylethylenediamine, and 1,2-dipiperidinoethane. Further,potassiumsaltssuchaspotassium t-amylate and potassium t-butoxide, and sodium salts such as sodium t-amylate may be used.
The randomizers may be used singly or two or more of them may be used in combination. The use amount thereof is selected in the range of preferably 0.01 to 1000 mole equivalents per mole of the lithium compound.

The temperature of the polymerization reaction is selected in the range of preferably 0 to 150°C, more preferably 20 to 130°C. The polymerization reaction can be carried out under developed pressure. Usually, it is preferable that the reaction be operated under a pressure sufficient to maintain the monomers in a liquid phase. That is, although the pressure depends on the individual substances to be polymerized, polymerization catalysts used, and polymerization temperature, a higher pressure can be used as desired. Such pressure can be obtained by a suitable method such as pressurizing the reactor with a gas inert to the polymerization reaction.
In the polymerization, for all the materials that participate in the polymerization, such as polymerization initiator, solvents, and monomers, it is preferable to use those materials from which reaction inhibiting substances such as water, oxygen, carbon dioxide, and protic compounds have been removed.
Note that in the case where the polymer to be obtained is an elastomer, it is preferable that the obtained homopolymer or copolymer have a glass transition temperature (Tg) obtained by a differential thermal analysis method of -110°C to -15°C. It is difficult to obtain a polymer having a glass transition temperature below -110°C while if the polymer has a glass transition temperature above -15°C, the obtained polymer may have a viscosity that is too high in a room temperature region to handle the polymer.

The modifier in the present invention is reacted with the obtained polymer having an active site of the organometal type in the molecule preferably in an amount stoichiometric to the active site or in excess thereof.
As for the intermediate modified polymer thus obtained the metal must be separated from the metallized site of the intermediate modified polymer, in a final step, to reproduce an active proton. Such reproduction of active protons can be readily performed by, for example, treating the polymer with alcohol or water and the reproduction of active protons in the intermediate modified polymer can be performed simultaneously in a steam stripping step during a usual desolvating and drying process.
According to the present invention, modified polymers can be produced by the above-mentioned method. Hereinafter, the reaction mechanism of the method of producing the modified polymer used in the present invention will be described taking an example of using N-methylaminopropyltrimethoxysilane (MAPMOS) as a modifier.

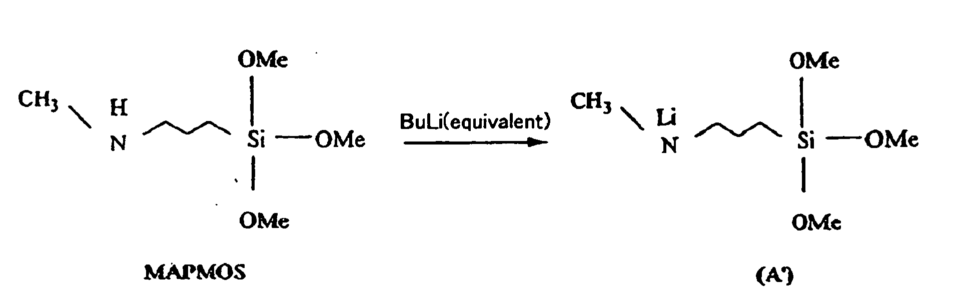

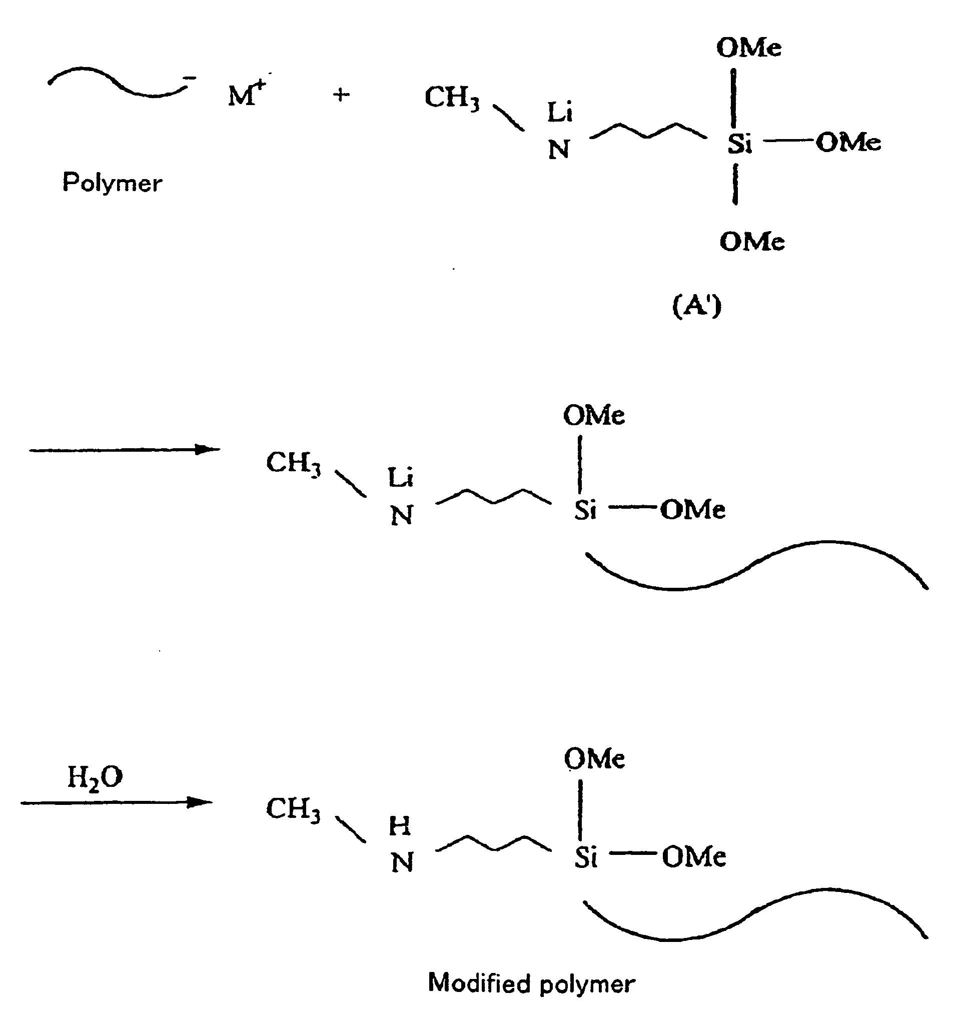

In the above, first MAPMOS is reacted with butyl lithium (BuLi) resulting in extraction of an active proton in an amino group in MAPMOS by Bu anion to form a lithium salt (A') of MAPMOS. Then, the lithium salt (A') is reacted with an active end of the polymer (M⁺ is an active metal) and then reacted with, for example, water to reproduce an amino group having an active proton. The modified polymer used in the present invention is obtained by such a reaction mechanism.
In the present invention, during this modification reaction, a known antioxidant or a short stop agent for the purpose of terminating the polymerization reaction is added as desired in the step subsequent to introduction of a residual compound group of the modifier to the active site of the polymer.
After the modification treatment in this manner, a conventional post-treatment such as desolvation is performed to obtain a modified polymer. The analysis of the polymer chain active site modifying group of the modified polymer can be performed by using high performance liquid chromatography (HPLC) or nuclear magnetic resonance spectrometry (NMR).

Further, the modified polymer has a Mooney viscosity (ML₁₊₄, 100°C) of preferably 10 to 150, more preferably 15 to 80. If the modified polymer has a Mooney viscosity of less than 10, the polymer has insufficient rubber properties including rupture characteristics while if the modified polymer has a Mooney viscosity of more than 150, the modified polymer has an unsatisfactory workability, so it is difficult to knead the modified polymer together with compounding ingredients.
According to the present invention, the modified polymer thus obtained has an active proton at the end thereof, so when carbon black is blended therewith, the dispersibility and reinforcement of the modified polymer can be greatly improved due to the hydrogen bond formed with the functional group on the carbon black surface. Further, when the modifier has, for example, a hydrocarbyloxysilane compound residue represented by the general formula (II) above, the modified polymer simultaneously also has a high affinity for silica at the same time.

In the rubber composition of the present invention, it is preferable that the rubber component (A) contain 10 mass% or more of the modified polymer having the protic amine structure obtained as described above and that the rubber composition contain 0.05 mass part or more and less than 5 mass parts of the oxidizer (B) per 100 mass parts of the component (A).
If the content of the modified polymer in the rubber component (A) is 10 mass % or more, the modified polymer exhibits good interaction with carbon black. The content of the modified polymer in the total rubber composition is preferably 30 to 100 mass%, more preferably 40 to 100 mass%.
The modified polymers may be used singly or two or more of them may be used in combination. The rubber component used in combination with the modified polymer includes natural rubber and diene-based synthetic rubber. Examples of the diene-based synthetic rubber include styrene-butadiene copolymer (SBR), polybutadiene (BR), polyisoprene (IR), butyl rubber (IIR), ethylene-propylene copolymer, and mixtures of these. Rubbers having partially a branched structure by use of a polyfunctional modifier, for example, tin tetrachloride may be used.
As the oxidizer for the component (B), cuprous oxide (Cu₂O) and/or silver oxide (Ag₂O) may be are used. The oxidizer has an effect of further increasing the interaction of the modified polymer with carbon black. From the viewpoint of this effect, silver oxide is particularly preferable.

If the content of the oxidizer as the component (B) is 0. 05 mass% or more, the above-mentioned effect can be obtained well while if the content of the oxidizer is less than 5 mass%, other properties of the rubber composition are not affected so much and also economical advantage is obtained. A preferred content of the oxidizer is 0.1 to 3.5 mass%.
The rubber composition of the present invention may further contain (C) 10 mass parts or more of carbon black based on 100 mass parts of the rubber component (A) as a reinforcing filler. The carbon black is not particularly limited and any one may be selected from those carbon black conventionally used as a reinforcing filler for rubber. Examples of such carbon black include FEF, SRF, HAF, ISAF, and SAF. Preferred is carbon black having an iodine absorption (IA) of 60 mg/g or more and a dibutyl phthalate absorption (DBP) of 80 ml/100g. By using such carbon black, improving effect of various physical properties becomes large. It is more preferable to use HAF, ISAF and SAF, which are especially excellent in abrasion resistance.

If the content of the carbon black is 10 mass parts or more based on 100 mass parts of the rubber component (A), improving effect on reinforcement and other properties of the rubber composition are exhibited sufficiently. Further, taking processing and so on into consideration, the content of carbon black is preferably 100 mass parts or less. In view of reinforcement, other physical properties, and processability, the content of carbon black is in the range of particularly preferably 20 to 60 mass parts.
In the rubber composition of the present invention, a part of the carbon black may be replaced by silica as a reinforcing filler as desired as far as the effects of the present invention are not damaged.
The silica is not particularly limited and may be optionally selected from those conventionally used as a reinforcing filler for rubber.
Examples of the silica include wet silica (precipitated silica) dry silica (fumed silica), calcium silicate, and aluminum silicate. Among these, wet silica, which has a significant effect of balancing the effect of improving rupture characteristics and wet grippability, is preferable.

When silica is used as a reinforcing filler, the rubber composition of the present invention may contain a silane coupling agent in order to further increase the reinforcing property of silica. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl) tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazole tetrasulfide. Among these, bis(3-triethoxysilylpropyl) tetrasulfide and 3-trimethoxysilylpropylbenzothiazolyl tetrasulfide are preferable from the viewpoint of the effect of improving reinforcing property. These silane coupling agents may be used singly or two or more of them may be used in combination.

In the case of the rubber composition of the present invention, a preferred blending amount of the silane coupling agent may differ based on the type of the coupling agent but is selected in the range of preferably 1 to 20 mass% based on silica. If this amount is in the above-mentioned range, the effect of the coupling agent is sufficiently exhibited and gelling of the rubber component tends to hardly occur. From the viewpoint of the effect of the coupling agent and prevention of gelling, the preferable amount of the silane coupling agent is in the range of 5 to 15 mass%.
The rubber composition of the present invention may contain various chemicals usually used in rubber industry, for example, vulcanizing agents, vulcanization promoters, processing oils, antioxidants, antiscorching agents, zinc white, and stearic acid, as desired as far as the object of the present invention is not damaged.
The rubber composition of the present invention is usually sulfur curable and for example, sulfur is preferably used as a vulcanizing agent in a use amount of 0.1 to 10.0 mass parts, more preferably 1.0 to 5.0 mass parts as sulfur per 100 mass parts of the rubber component. If the sulfur content is 0.1 mass parts or more, the vulcanized rubber has good rupture strength, abrasion resistance, and low heat generation while if the sulfur content is 10.0 mass parts or less, the rubber elasticity of the vulcanized rubber is good.

The vulcanization promoter that can be used in the present invention is not particularly limited and examples thereof include thiazole compounds such as M (2-mercaptobenzothiazole), DM (dibenzothiazyl disulfide), and CZ (N-cyclohexyl-2-benzothiayl sulfenamide), and guanidine compounds such as DPG (diphenylguanidine). Their use amount is preferably 0.1 to 5.0 mass parts, more preferably 0.2 to 3.0 mass parts per 100 mass parts of the rubber component.
The processing oil that can be used in the rubber composition of the present invention includes, for example, paraffin-based, naphthene-based, and aromatic-based ones. The aromatic-based processing oil is used for applications where tensile strength and abrasion resistance are considered important, the naphthene- or paraffin-based processing oil is used for applications where hysteresis loss and low temperature properties are considered important. The use amount of the processing oil is preferably 0 to 100 mass parts per 100 mass parts of the rubber component. If the use amount of the processing oil is 100 mass parts or less, aggravation of the tensile strength and low heat generation property can be prevented.
Further, the antioxidants that can be used in the rubber composition of the present invention include, for example, 3C(N-isopropyl-N'-phenyl-p-phenylenediamine), 6C[N-(1,3-dimethylbutyl)-N'-phenyl-p-phenylenediamine], AW (6-ethoxy-2,2,4-trimethyl-1,2-dihydroquinoline), and high temperature condensates of diphenylamine and acetone. The use amount of the antioxidants is preferably 0.1 to 5.0 mass parts, more preferably 0.3 to 3.0 mass parts per 100 mass parts of the rubber component.

The method of producing the rubber composition of the present invention must have a blending stage of mixing the modified polymer in the rubber composition (A) and the oxidizer in the component (B) in order to increase interaction with carbon black and improve the dispersibility of carbon black.
It is preferable that the mixture of the modified polymer and the oxidizer be mixed with other compounding ingredients and/or rubber other than the modified polymer.
Further, it is preferable that, after the mixture of the modified polymer and the oxidizer is mixed with carbon black or after the modified polymer, the oxidizer, and carbon black are mixed, the resultant mixture be mixed with an antioxidant. In particular, mixing the antioxidant and the vulcanizing agent in the same blending stage is advantageous.
Specifically, a blending formula (a) and a blending formula (b) indicated below are used.

In the blending formula (a), first, the modified polymer and the oxidizer are mixed and rough kneading is performed and if necessary, rubber other than the modified polymer is mixed. Then, in a first blending stage, inorganic filler such as carbon black or carbon black and silica, and optionally a silane coupling agent, a processing oil, stearic acid and an antioxidant agent are mixed, and then in a second blending atage, further zinc white, a vulcanization promoter and sulfur are mixed.
On the other hand, in the blending formula (b), first, the modified polymer and the oxidizer are mixed and rough kneading is performed and if necessary, rubber other than the modified polymer is mixed. Then, in a first blending stage, inorganic filler such as carbon black or carbon black and silica, and optionally a silane coupling agent, a processing oil and stearic acid are mixed, and then in a second blending stage, further an antioxidant agent, zinc white, a vulcanization promoter, and sulfur are mixed.
Of the above-mentioned blending formulas (a) and (b), the blending formula (b) is preferable in view of low loss performance (low heat generation property).

The rubber composition of the present invention can be obtained by kneading the components by a kneading machine such as a roll or an internal mixer and after molding processing, vulcanization is performed and the product can be used for applications for tire such as tire tread, under tread, sidewall, carcass coating rubber, belt coating rubber, bead filler, chafer, and bead coating rubber, as well as applications for vibration absorbing rubber, belt, hose and other industrial products. In particular, the rubber composition of the present invention can be advantageously used as a rubber for tire tread.
The tire of the present invention can be produced by a conventional method using the rubber composition of the present invention. That is, the rubber composition of the present invention containing various chemicals as described above in an unvulcanized stage is processed into respective members and molded by a conventional molding method on a tire building machine to produce agreentire. The green tire is heated under pressure in a vulcanizing machine to obtain a tire.
The tire of the present invention thus obtained has good low-fuel consumption property and simultaneously has excellent rupture characteristics and abrasion resistance and in addition has good processability of the rubber composition and hence excellent productivity.

### EXAMPLE

Hereinafter, the present invention is described in more detail by way of examples. However, the present invention should not be considered to be limited to these examples.
Note that the physical properties of the polymer were measured by the following methods.

### «Physical property of polymer»

Measurement of peak molecular weight was performed by gel permeation chromatography [GPC; HLC-8020 manufactured by Tosoh Corporation, column: GMH-XL manufactured by Tosoh Corporation (two columns in series) ] and determined by using differential refractive index as polystyrene based on a monodisperse polystyrene as a standard.
The Mooney viscosity was measured by using a RLM-01 Model tester manufactured by Toyo Seiki Co., Ltd. at 100°C.
The low heat generation property of vulcanized rubber was measured by the following method and the Mooney viscosity of the rubber composition was measured as follows.

### «Low heat generation property of vulcanized rubber»

Using a viscoelasticity measuring apparatus (manufactured by Rheometrics Inc.), measurement was performed by determining tan δ (50°C) at a temperature of 50°C, at a strain of 5%, and a frequency of 15 Hz. The smaller tan δ (50°C), the lower heat generation.

### «Mooney viscosity of rubber composition»

According to JIS K6300-1994, Mooney viscosity [ML₁₊₄/130°C] was measured at 130°C.

The raw materials used for polymerization were those dried and purified unless otherwise indicated specifically.

### Production Example 1 Preparation of a modifier solution

In a 300-ml pressure-resistant glass vessel dried and purged with nitrogen, 1 mol/liter cyclohexane solution of N-methylaminopropyltrimethoxysilane (MAPMOS) was prepared, and equivalent to MAPMOS, 3.65 mol/liter cyclohexane solution of n-butyl lithium (BuLi) was dripped thereto, and the mixture was well stirred to prepare a modifier solution.

### Production Example 2 Preparation of Modified Polymer A

In a 800-ml pressure-resistant glass vessel dried and purged with nitrogen, 300 g of cyclohexane, 40 g of 1, 3-butadiene monomer, 10 g of styrene monomer, and 0.43 mmol of ditetrahydrofurylpropane were charged and 0.48 mmol of n-butyl lithium (BuLi) was added to the mixture. Thereafter, the resultant mixture was polymerized at 50°C for 1.5 hours. Polymerization conversion rate of the monomers was approximately 100%.
To the polymer system, the modifier solution prepared in Production Example 1 was added so that N-methylaminopropyl trimethoxysilane was in an amount of 0.43 mmol and then the mixture was subj ected to modification reaction at 50°C for 30 minutes. After that, 0.5 ml of a 5 mass% isopropanol solution of 2,6-di-t-butyl-p-cresol (BHT) was added to terminate the reaction. Then, according to a conventional method, steam stripping, desolvation and drying were performed to obtain a modified polymer A. The analytical values of the obtained polymer are shown in Table 1.

### Production Example 3 Production of Polymer B

A polymer B was obtained in the same manner as that in Production Example 2 except that the addition amount of BuLi was changed to 0.38 mmol and the modification reaction using the modifier solution was not performed. The analytical values of the obtained polymer are shown in Table 1.

**Table 1**

| | | (Modified) Polymer | |
|---|---|---|---|
| | | A | B |
| Modifier | Type | MAPMOS | None |
| | Amount (mmol) | 0.43 | - |
| Peak molecular weight of unmodified polymer (kg/mol) | | 195 | 282 |
| Mooney viscosity [ML₁₊₄/100°C] | | 35 | 49 |

### Examples 1 to 4 and Comparative Examples 1 to 3

Using Polymers A (modified) and Polymer B (unmodified) obtained in production Examples 2 and 3, rubber compositions were prepared according to the blending formulas (a) and (b) shown in Table 2 and Mooney viscosity of each rubber composition was measured. In addition, the polymers were vulcanized at 160°C for 15 minutes and physical property (low heat generation property) of the vulcanized rubbers was measured. The results obtained are shown in Table 3.

**Table 2**

| Kneading step | Blending formula (a) [Content of blend] | (Mass part) |
|---|---|---|
| Rough kneading of polymer | (Modified) Polymer Silver | 100 |
| | oxide (Ag₂O) | See Table 3 |
| First stage | Carbon black | 50 |
| | Aromatic oil | 10 |
| | Stearic acid | 2 |
| | Antioxidant 6C | 1 |
| Second stage | Zinc white | 3 |
| | Vulcanization promoter DPG | 0.5 |
| | Vulcanization promoter DM | 0.5 |
| | Vulcanization promoter NS | 0.5 |
| | Sulfur | 1.5 |
| | | |

| Kneading step | Blending formula (a) [Content of blend] | (Mass part) |
|---|---|---|
| Rough kneading of polymer | (Modified) Polymer Silver | 100 |
| | oxide (Ag₂O) | See Table 3 |
| First stage | Carbon black | 50 |
| | Aromatic oil | 10 |
| | Stearic acid | 2 |
| Second stage | Antioxidant 6C | 1 |
| | Zinc white | 3 |
| | Vulcanization promoter DPG | 0.5 |
| | Vulcanization promoter DM | 0.5 |
| | Vulcanization promoter NS | 0.5 |
| | Sulfur | 1.5 |

[Notes]
Carbon black; SEAST KH(N339),trade mark, manufactured by Tokai Carbon Co., Ltd.
Antioxidant 6C; N-(1,3-dimethylbutyl)-N'-phenyl-p-phenylenediamine Vulcanization accelerator DPG; diphenylguanidine
Vulcanization accelerator DM; mercaptobenzothiazyl disulfide Vulcanization accelerator NS; N-t-butyl-2-benzothiazyl sulfenamide

**Table 3**

| | | (Modified) Polymer Type | Blending formula | Silver oxide (Mass part) | Mooney viscosity [ML₁₊₄/130°C] | tan δ |
|---|---|---|---|---|---|---|
| Example | 1 | A | a | 0.5 | 39 | 0.128 |
| | 2 | A | a | 2 | 37 | 0.116 |
| | 3 | A | b | 0.2 | 39 | 0.126 |
| | 4 | A | b | 2 | 36 | 0.098 |
| Comparative example | 1 | B | a | 0 | 35 | 0.160 |
| | 2 | B | a | 0.5 | 35 | 0.158 |
| | 3 | A | a | 0 | 42 | 0.135 |

Table 3 demonstrates the following.
The rubber compositions (Examples 1 to 4) of the present invention containing modified polymers having a protic amine structure and silver oxide are superior in low loss performance (low heat generation property) to the composition of Comparative Example 3 that contains the modified polymer but no silver oxide, the composition of Comparative Example 1 that contains the unmodified polymer but no silver oxide, the composition of Comparative Example 2 that contains the unmodified polymer and silver oxide.
Further, blending an antioxidant in the blending stage after blending the modified polymer, silver oxide, and carbon black results in a further increase in low loss performance (by comparison between Example 2 and Example 4).

### INDUSTRIAL APPLICABILITY

The rubber composition of the present invention has excellent interaction between the rubber component and carbon black, so it enables improvement of dispersibility of carbon black, and is capable of providing a tire that has excellent low heat generating property, rupture characteristics, and abrasion resistance.

## Claims

1. A rubber composition comprising;
(A) a rubber component containing a modified polymer having a protic amine structure; and
(B) an oxidizer, wherein the oxidiser is cuprous oxide (Cu₂O) and/or silver oxide (Ag₂O).

2. The rubber composition according to Claim 1, wherein the modified polymer as the component (A) is obtained by a production method that includes the steps of
(a) reacting a protic amine functional group-containing compound represented by the general formula (I):
X¹-A¹-Y¹ (I)
where X¹ is a monovalent organic group having a functional group capable of reacting with an active site of the polymer to produce a bond, Y¹ is a monovalent organic group having a protic amine functional group in which an active proton is hydrogen bonded to nitrogen, and A¹ is a divalent hydrocarbon group having 1 to 20 carbon atoms, with an alkali metal compound or an alkaline earth metal compound to metallize the active proton in the protic amine functional group-containing compound with an organo alkali metal or an alkaline earth metal to obtain a modifier;
(b) reacting the modifier with a polymer having an active site at the active site to obtain an intermediate modified product of the polymer; and
(c) separating the metal from the metallized site of the intermediate modified product of the polymer to reproduce an active proton.

3. The rubber composition according to Claim 1, wherein the modified polymer as the component (A) is obtained by a production method that includes the steps of
(d) reacting a protic amine functional group-containing compound represented by the general formula (I)
X¹-A¹-Y¹ (I)
where X¹ is a monovalent organic group having a functional group capable of reacting with an active site of the polymer to produce a bond, Y¹ is a monovalent organic group having a protic amine functional group in which an active proton is hydrogen bonded to nitrogen, and A¹ is a divalent hydrocarbon group having 1 to 20 carbon atoms, with an alkylsilyl halide to obtain a modifier,
(e) reacting the modifier with a polymer having an active site at the active site to obtain an intermediate modified product of the polymer, and
(f) separating an alkylsilyl group from an alkylsilylated site of the intermediate modified product of the polymer to reproduce an active proton.

4. The rubber composition according to any one of claims 1 to 3, wherein the rubber component (A) contains 10 mass% or more of the modified polymer, and the rubber component (A) contains 0.05 mass parts or more and less than 5 mass parts of the oxidizer (B) per 100 mass parts of the component (A)

5. The rubber composition according to any one of claims 1 to 4, wherein the rubber composition contains 10 mass parts or more of carbon black (C) per 100 mass parts of the component (A).

6. The rubber composition according to any one of claims 1 to 5, which is sulfur curable.

7. A method of producing the rubber composition according to any one of claims 1 to 6, comprising a stage of mixing the modified polymer in the component (A) and the component (B).

8. The method according to claim 7, wherein another compounding ingredient and/or rubber is mixed with a mixture of the modified polymer in the component (A) and the component (B).

9. The method according to claim 7, wherein a mixture of the modified polymer in the component (A) and the component (B) and carbon black, or the modified polymer in the component (A), the component (B) and carbon black are mixed and then an antioxidant is added to the resultant mixture

10. The method according to any one of claims 7 to 9, wherein an antioxidant and a vulcanizing agent are mixed in a same stage.

11. A tire comprising the rubber composition according to any one of claims 1 to 7.

## Patentansprüche

1. Kautschukzusammensetzung umfassend:
(A) eine Kautschukkomponente, die ein modifiziertes Polymer enthält, das eine protische Aminstruktur aufweist; und
(B) ein Oxidationsmittel, wobei das Oxidationsmittel Kupfer(I)-oxid (Cu₂O) und/oder Silberoxid (Ag₂O) ist;

2. Kautschukzusammensetzung nach Anspruch 1, wobei das modifizierte Polymer als Komponente (A) durch ein Herstellungsverfahren erhalten wird, das die Schritte umfasst des:
(a) Reagierens einer eine protische, aminfunktionelle Gruppe enthaltenden Verbindung, die durch die allgemeine Formel (I) dargestellt ist:
X¹-A¹-Y¹ (I)
wobei X¹ eine einwertige organische Gruppe ist, die eine funktionelle Gruppe aufweist, die des Reagierens mit einer aktiven Stelle des Polymers fähig ist, um eine Bindung zu erzeugen, Y¹ eine einwertige organische Gruppe ist, die eine protische aminfunktionelle Gruppe aufweist, in der ein aktives Proton an Stickstoff wasserstoffgebunden ist und A¹ eine zweiwertige Kohlenwasserstoffgruppe ist, die 1 bis 20 Kohlenstoffatome aufweist, mit einer Alkalimetallverbindung oder einer Erdalalkalimetallverbindung, um das aktive Proton in der eine protische aminfunktionelle Gruppe enthaltenden Verbindung mit einem Organoalkalimetall oder einem Organoerdalkalimetall zu metallisieren, um ein Modifiziermittel zu erhalten;
(b) Reagierens des Modifiziermittels mit einem Polymer, das eine aktive Stelle aufweiset, an der aktiven Stelle, um ein modifiziertes Zwischenprodukt des Polymers zu erhalten; und
(c) Trennens des Metalls von der metallisierten Stelle des modifizierten Zwischenprodukts des Polymers, um ein aktives Proton zu reproduzieren.

3. Kautschukzusammensetzung nach Anspruch 1, wobei das modifizierte Polymer als Komponente (A) durch ein Herstellungsverfahren erhalten wird, das die Schritte umfasst des:
(d) Reagierens einer eine protische, aminfunktionelle Gruppe enthaltenden Verbindung, die durch die allgemeine Formel (I) dargestellt ist:
X¹-A¹-Y¹ (I)
wobei X¹ eine einwertige organische Gruppe ist, die eine funktionelle Gruppe aufweist, die des Reagierens mit einer aktiven Stelle des Polymers fähig ist, um eine Bindung zu erzeugen, Y¹ eine einwertige organische Gruppe ist, die eine protische aminfunktionelle Gruppe aufweist, in der ein aktives Proton Hydrogen ist, das an Stickstoff gebunden ist und A¹ eine zweiwertige Kohlenwasserstoffgruppe ist, die 1 bis 20 Kohlenstoffatome aufweist, mit einem Alkalisilylhalogenid, um ein Modifiziermittel zu erhalten,
(e) Reagierens des Modifiziermittels mit einem Polymer, das eine aktive Stelle aufweist, an der aktiven Stelle, um ein modifiziertes Zwischenprodukt des Polymers zu erhalten; und
(f) Trennens einer Alkylsilylgruppe von einer alkylsilylierten Stelle des modifizierten Zwischenprodukts des Polymers, um ein aktives Proton zu reproduzieren.

4. Kautschukzusammensetzung nach einem der Ansprüche 1 bis 3, wobei die Kautschukkomponente (A) 10 Massen-% oder mehr des modifizierten Polymers enthält und die Kautschukkomponente (A) 0,05 Massenteile oder mehr und weniger als 5 Massenteile des Oxidationsmittels (B) pro 100 Massenteile der Komponente (A) enthält.

5. Kautschukzusammensetzung nach einem der Ansprüche 1 bis 4, wobei die Kautschukzusammensetzung 10 Massenteile oder mehr Ruß (C) pro 100 Massenteile der Komponente (A) enthält.

6. Kautschukzusammensetzung nach einem der Ansprüche 1 bis 5, die schwefelaushärtbar ist.

7. Verfahren zum Herstellen der Kautschukzusammensetzung nach einem der Ansprüche 1 bis 6, umfassend die Stufe des Mischens des modifizierten Polymers in der Komponente (A) und der Komponente (B).

8. Verfahren nach Anspruch 7, wobei ein anderer Compoundierbestandteil und/oder Kautschuk mit einer Mischung des modifizierten Polymers in der Komponente (A) und der Komponente (B) gemischt wird.

9. Verfahren nach Anspruch 7, wobei eine Mischung des modifizierten Polymers in der Komponente (A) und der Komponente (B) und von Ruß oder des modifizierten Polymers in der Komponente (A), der Komponente (B) und von Ruß gemischt wird und dann ein Antioxidationsmittel der so gebildeten Mischung hinzugesetzt wird.

10. Verfahren nach einem der Ansprüche der Ansprüche 7 bis 9, wobei ein Antioxidationsmittel und ein Vulkanisiermittel in einer selben Stufe gemischt werden,

11. Reifen umfassend die Kautschukzusammensetzung nach einem der Ansprüche 1 bis 7.

## Revendications

1. Composition de caoutchouc comprenant:
(A) un composant de caoutchouc contenant un polymère modifié ayant une structure d'amine protique; et
(B) un oxydant, dans laquelle l'oxydant est un oxyde cuivreux (Cu₂O) et/ou un oxyde d'argent (Ag₂O).

2. Composition de caoutchouc selon la revendication 1, dans laquelle le polymère modifié en tant que composant (A) est obtenu par un procédé de production qui inclut les étapes:
(a) de réaction d'un composé contenant un groupe fonctionnel d'amine protique représenté par la formule générale (I):
X¹-A¹-Y¹ (I)
où X¹ est un groupe organique monovalent possédant un groupe fonctionnel capable de réagir avec un site actif du polymère pour produire une liaison, Y¹ est un groupe organique monovalent possédant un groupe fonctionnel d'amine protique dans lequel un proton actif est un hydrogène lié à un azote, et A¹ est un groupe hydrocarbure divalent possédant de 1 à 20 atomes de carbone, avec un composé de métal alcalin ou un composé de métal alcalino-terreux pour métalliser le proton actif dans le composé contenant un groupe fonctionnel d'amine protique avec un métal alcalin ou un métal alcalino-terreux organo pour obtenir un agent de modification;
(b) de réaction de l'agent de modification avec un polymère possédant un site actif au niveau du site actif pour obtenir un produit modifié intermédiaire du polymère; et
(c) de séparation du métal à partir du site métallisé du produit modifié intermédiaire du polymère pour produire à nouveau un proton actif.

3. Composition de caoutchouc selon la revendication 1, dans laquelle le polymère modifié en tant que composant (A) est obtenu par un procédé de production qui inclut les étapes:
(d) de réaction d'un composé contenant un groupe fonctionnel d'amine protique représenté par la formule générale (I):
X¹-A¹-Y¹ (I)
où X¹ est un groupe organique monovalent possédant un groupe fonctionnel capable de réagir avec un site actif du polymère pour produire une liaison, Y¹ est un groupe organique monovalent possédant un groupe fonctionnel d'amine protique dans lequel un proton actif est un hydrogène lié à un azote, et A¹ est un groupe hydrocarbure divalent possédant de 1 à 20 atomes de carbone, avec un halogénure d'alkylsilyle pour obtenir un agent de modification;
(e) de réaction de l'agent de modification avec un polymère possédant un site actif au niveau du site actif pour obtenir un produit modifié intermédiaire du polymère; et
(f) de séparation d'un groupe alkylsilyle à partir d'un site alkylsilylé du produit modifié intermédiaire du polymère pour produire à nouveau un proton actif.

4. Composition de caoutchouc selon l'une quelconque des revendications 1 à 3, dans laquelle le composant de caoutchouc (A) contient 10% en poids ou plus du polymère modifié et le composant de caoutchouc (A) contient 0,05 partie en poids ou plus et moins de 5 parties en poids de l'oxydant (B) pour 100 parties en poids du composant (A).

5. Composition de caoutchouc selon l'une quelconque des revendications 1 à 4, où la composition de caoutchouc contient 10 parties en poids ou plus de noir de carbone (C) pour 100 parties en poids du composant (A).

6. Composition de caoutchouc selon l'une quelconque des revendications 1 à 5, qui est durcissable par du soufre.

7. Procédé pour la production de la composition de caoutchouc selon l'une quelconque des revendications 1 à 6, comprenant une phase de mélange du polymère modifié dans le composant (A) et le composant (B).

8. Procédé selon la revendication 7, dans lequel un autre ingrédient de combinaison et/ou un caoutchouc est mélangé avec un mélange du polymère modifié dans le composant (A) et le composant (B).

9. Procédé selon la revendication 7, dans lequel un mélange du polymère modifié dans le composant (A) et le composant (B) et un noir de carbone, ou le polymère modifié dans le composant (A), le composant (B) et un noir de carbone sont mélangés et ensuite un antioxydant est ajouté au mélange résultant.

10. Procédé selon l'une quelconque des revendications 7 à 9, dans lequel un antioxydant et un agent de vulcanisation sont mélangés dans une même phase.

11. Pneumatique comprenant la composition de caoutchouc selon l'une quelconque des revendications 1 à 6.
